# EUROPEAN PATENT APPLICATION

(11) **EP 4 306 459 A1**
(43) Date of publication of application: **17.01.2024**
(21) Application number: 21930087.8
(22) Date of filing: 10.03.2021
(51) Int. Cl.: B65G 43/00

(54) **WASTE MATERIAL PROCESSING SYSTEM**

(71) Applicant: Fuji Corporation, Chiryu-shi, Aichi 472-8686 (JP)
(72) Inventor: KONDO, Hironori, Chiryu-shi, Aichi 472-8686 (JP); KAWAGUCHI, Koji, Chiryu-shi, Aichi 472-8686 (JP)
(74) Representative: Grünecker Patent- und Rechtsanwälte PartG mbB
(86) International application number: PCT/JP2021/009416
(87) International publication number: WO 2022/190230

(57) **Abstract**

A waste material processing system of the present disclosure that places a waste material on a conveyance surface of a conveyance section, conveys the waste material in a conveyance line, and recycles the waste material, the system includes a detection section disposed on a downstream side of a removal area where foreign matters included in the waste material are removed in the conveyance line, and configured to detect the foreign matters remaining in the conveyed waste material.

## Description

### Technical Field

The present description discloses a waste material processing system.

### Background Art

Conventionally, in a waste material processing system for recycling roadbed material and the like, waste materials which are recycle targets and foreign matters which are not recycle targets are mixed and conveyed by a conveyance device such as a conveyor. In such a waste material processing system, for example, there has been proposed a system in which foreign matters included in waste materials are removed by wind power selection using discharge air (for example, refer to Patent Literature 1 and the like). In addition, in such a waste material processing system, there has been proposed a foreign matter removing device in which a comb-shaped scraping comb is used to scrape foreign matters into scrap chutes formed on both sides of a belt conveyor by rotating a support shaft disposed above the belt conveyor along a conveyance direction of the waste materials (for example, refer to Patent Literature 2). In this foreign matter removing device, in a case where a foreign matter is detected, the belt conveyor is stopped, the scraping comb is driven, and the foreign matter is removed from the belt conveyor. Further, in a waste material processing system, there has been proposed a system including a crushing device for crushing waste materials and a conveyor for conveying waste materials, and issuing an alarm to the surroundings before the starting of a crusher (for example, refer to Patent Literature 3). In this waste material processing system, it is possible to alert a worker of the start of the device and to prevent the danger.

### Patent Literature

Patent Literature 1: JP-A-H03-000172
Patent Literature 2: JP-UM-A-S55-140022
Patent Literature 3: JP-A-H11-156227

### Summary of the Invention

### Technical Problem

However, in the waste material processing systems described in Patent Literatures 1 and 2, it is not clear whether the removal of the foreign matter is successful, and even if the foreign matter remains, the reason is not clear, and there is no way to deal with it. In addition, in the waste material processing systems described in Patent Literatures 1 and 2, no special consideration is given to the removal of the foreign matters, and it is required to improve the efficiency of the removal of the foreign matters. In addition, in the waste material processing system described in Patent Literature 3, an alarm can be issued to a worker, but a special alarm device is required only to alarm the worker.

The present disclosure is made to solve the above-described problems, and a main object of the present disclosure is to provide a waste material processing system capable of more appropriately executing removal of foreign matters when recycling waste materials.

The present disclosure adopts the following means for achieving the main object described above.

A waste material processing system disclosed in the present description is a waste material processing system for placing a waste material on a conveyance surface of a conveyance section, conveying the waste material in a conveyance line, and recycling the waste material, the system including a detection section disposed on a downstream side of a removal area for removing foreign matters included in the waste material in the conveyance line, and configured to detect the foreign matters remaining in the conveyed waste material.

In this waste material processing system, it is possible to execute removal of foreign matters more appropriately when recycling the waste material.

### Brief Description of Drawings

Fig. 1 is an explanatory diagram illustrating an example of a configuration of recycling system 10.
Fig. 2 is a perspective diagram illustrating an example of a schematic configuration of waste material processing system 30.
Fig. 3 is an explanatory diagram illustrating an example of execution condition information 53 stored in storage section 52.
Fig. 4 is an explanatory diagram illustrating an example of history information 60 stored in storage section 52.
Fig. 5 is a flowchart illustrating an example of an attention operation execution processing routine.
Fig. 6 is an explanatory diagram illustrating an example of an attention operation by waste material processing system 30.
Fig. 7 is a flowchart illustrating an example of a waste material processing execution recording routine.
Fig. 8 is a flowchart illustrating an example of an execution condition setting/execution processing routine.
Fig. 9 is an explanatory diagram illustrating an example of recognition image 70 and detection image 71 in waste material processing.
Fig. 10 is a flowchart illustrating an example of an analysis processing routine.
Fig. 11 is an explanatory diagram illustrating an example of a schematic configuration of another waste material processing system 30B.

### Description of Embodiments

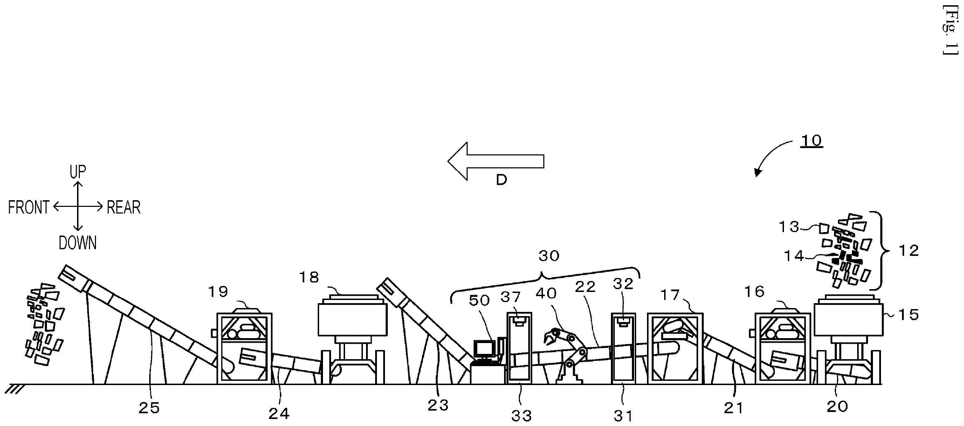

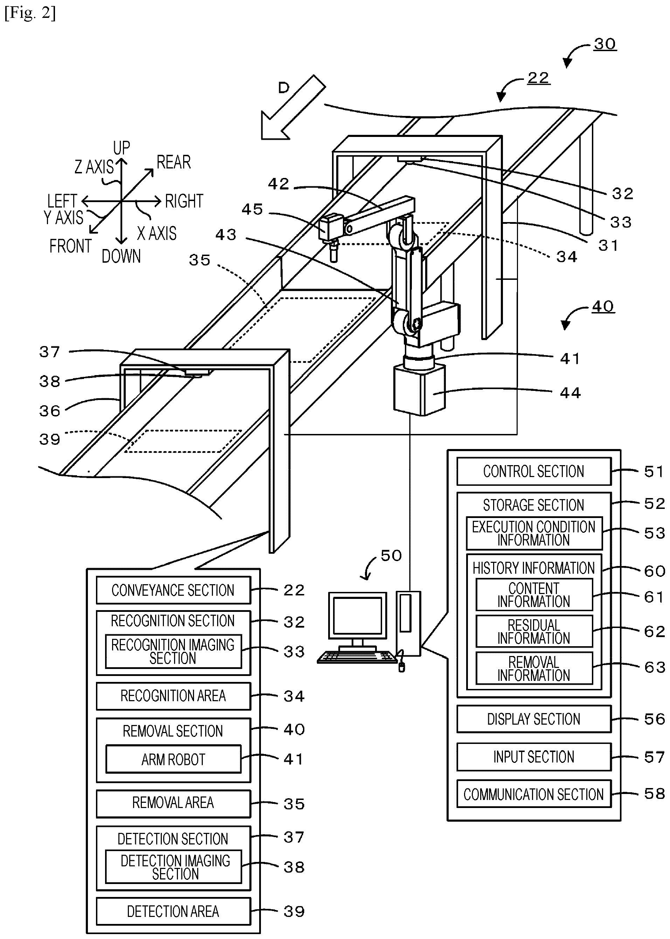

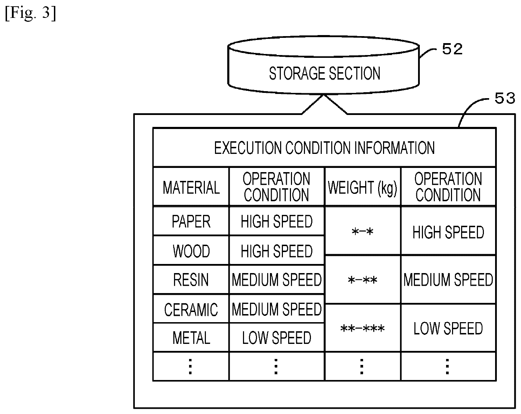

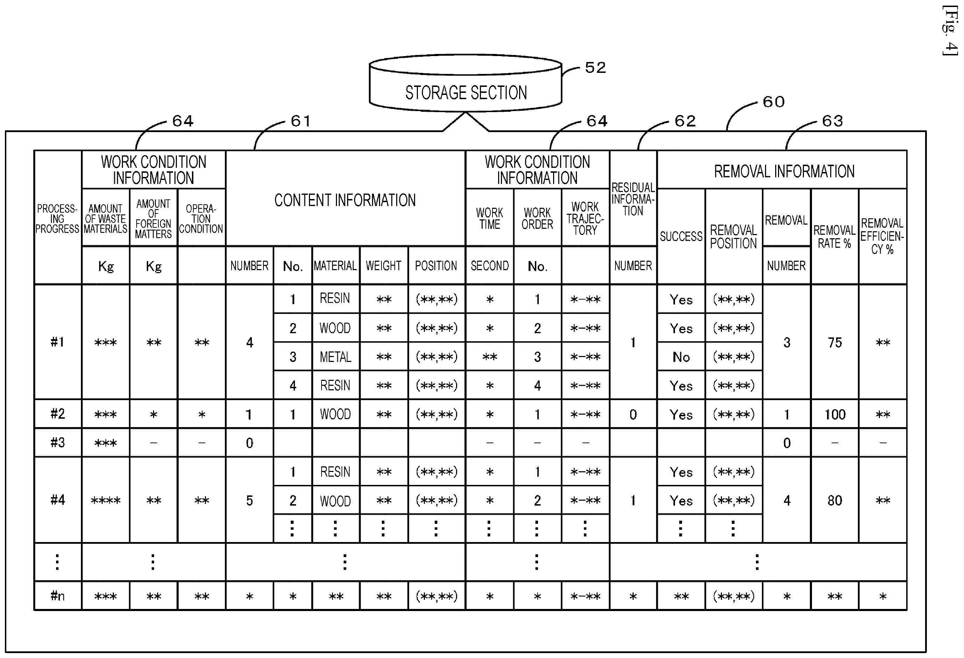

An embodiment of the present disclosure will be described with reference to the accompanying drawings. Fig. 1 is an explanatory diagram illustrating an example of a configuration of recycling system 10. Fig. 2 is a perspective diagram illustrating an example of a schematic configuration of waste material processing system 30. Fig. 3 is an explanatory diagram illustrating an example of execution condition information 53 stored in storage section 52. Fig. 4 is an explanatory diagram illustrating an example of history information 60 stored in storage section 52. In the present embodiment, a left-right direction, a front-rear direction, and an up-down direction will be described as illustrated in Figs. 1 and 2. In addition, in the present embodiment, a direction in which waste material 12 is conveyed is referred to as conveyance direction D.

Waste material 12 processed by recycling system 1 is a mixture of target object 13, which is a target for recycling, such as stone, sand, and concrete, and foreign matter 14 including paper, resin, wood, metal, or the like. As illustrated in Fig. 1, recycling system 1 includes first crusher 15, first magnetic separator 16, screen machine 17, waste material processing system 30, second crusher 18, second magnetic separator 19, and conveyance sections 20 to 25.

First crusher 15 is a device that first crushes waste material 12 as a raw material. First crusher 15 crushes waste material 12 so as to have a predetermined primary size or less (for example, 40 cm or less), for example. First magnetic separator 16 is a device that removes the foreign matter of magnetic material included in waste material 12 by magnetic force. Screen machine 17 is, for example, a device that separates waste material 12 having a primary size or more and waste material 12 having a size less than the primary size by passing waste material 12 over a mesh. Second crusher 18 is a device that secondarily crushes waste material 12 to a size smaller than that of first crusher 15. Second crusher 18 crushes waste material 12 so as to have a predetermined secondary size or less (for example, 10 cm or less). Second magnetic separator 19 is a device that removes a magnetic material that cannot be completely removed by first magnetic separator 16 and waste material processing system 30 from waste material 12.

Conveyance sections 20 to 25 as conveyance lines are devices that place waste material 12 on a conveyance surface and convey waste material 12 along conveyance direction D, and are configured as, for example, belt conveyors. Conveyance sections 20 to 25 may have configurations other than the belt conveyor as long as waste material 12 is conveyed.

Waste material processing system 30 is a system that places waste material 12 on a conveyance surface of conveyance section 22, conveys waste material 12 in the conveyance line, removes foreign matter 14, and recycles waste material 12. As illustrated in Fig. 2, waste material processing system 30 includes conveyance section 22, recognition section 32, detection section 37, removal section 40, and control device 50. Conveyance section 22 places waste material 12 on the conveyance surface, and conveys waste material 12 on the conveyance line at a conveyance speed set as an execution condition.

Recognition section 32 is a device that is disposed on an upstream side of removal area 35 where foreign matter 14 included in waste material 12 is removed in the conveyance line and that recognizes foreign matter 14 included in waste material 12. Recognition section 32 is disposed on support member 31 provided above recognition area 34 for recognizing target object 13 and foreign matter 14 included in waste material 12. Recognition section 32 includes recognition imaging section 33 that images the conveyance line and obtains a recognition image. Recognition imaging section 33 is a camera that captures a still image or a video of recognition area 34. Recognition imaging section 33 images waste material 12 at regular intervals from above the conveyance surface of conveyance section 22, and outputs image data of the captured recognition image to control device 50. In addition, recognition section 32 may include, for example, one or more of an InGaAs sensor, infrared thermography, a polarization camera, a hyperspectral camera, and a terahertz camera. The InGaAs sensor is a sensor capable of identifying objects and their types by differences in reflection spectra. The infrared thermography is capable of identifying objects and their types by differences in thermal characteristics. The polarization camera acquires a difference in shape of a surface of an object as polarization information and identifies a characteristic of the object. The hyperspectral camera is capable of identifying objects and their types by differences in reflection spectra having a wider range. The terahertz camera uses electromagnetic waves that are intermediate between infrared and radio waves, has a high penetration rate, and can recognize an inside of an object. Recognition section 32 is configured to recognize a presence position of foreign matter 14, its material, and the like.

Detection section 37 is a device disposed on a downstream side of removal area 35 to detect foreign matter 14 remaining in waste material 12 to be conveyed. Detection section 37 is disposed on support member 36 provided above detection area 39 for recognizing target object 13 and foreign matter 14 included in waste material 12. Detection section 37 includes detection imaging section 38 that images the conveyance line and obtains a detection image. Detection imaging section 38 is a camera that captures a still image or a video of detection area 39. Detection imaging section 38 images waste material 12 at regular intervals from above the conveyance surface of conveyance section 22, and outputs image data of the captured detection image to control device 50. Detection section 37 may have a configuration similar to that of recognition section 32. Detection section 37 may include, for example, one or more of the above-described InGaAs sensor, infrared thermography, polarization camera, hyperspectral camera, and terahertz camera. Detection section 37 is configured to recognize a presence position of foreign matter 14, its material, and the like.

Removal section 40 is a device that is disposed in removal area 35 and that executes work for removing foreign matter 14 included in waste material 12. Removal section 40 may include arm robot 41. As illustrated in Fig. 2, for example, arm robot 41 includes first arm 42, second arm 43, pedestal section 44, and tip portion 45. Arm robot 41 is configured as, for example, a 5-axis or 6-axis multi-joint robot, and is configured to be able to move objects in removal area 35. Tip portion 45 is configured as an end effector and has a gripping member that grips an object such as foreign matter 14 by gripping operation. Arm robot 41 receives a command from control device 50 and executes an operation according to a predetermined execution condition.

Control device 50 is a device for controlling the entire waste material processing system 30 and includes control section 51, storage section 52, display section 56, input section 57, and communication section 58. Control section 51 is configured as a microprocessor centered on CPU, and controls the entire device. Control section 51 has, for example, a function of a processing section that performs processing for causing storage section 52 to store removal information related to a state of foreign matter removal in the removal area. In addition, control section 51 has a function as an execution section that causes a predetermined operation section including one or more of conveyance sections 20 to 25 and removal section 40 to execute a predetermined attention operation. Further, control section 51 has a function as a control section for setting an operation condition of removal section 40 and controlling removal section 40 under the set operation condition. Storage section 52 is a storage medium for storing information and includes, for example, HDD or a flash memory. Display section 56 is a display for displaying and outputting images, characters, symbols, or the like. Input section 57 is a device having, for example, a keyboard or a mouse, and is used by a worker to input a command to control device 50. Communication section 58 is an interface for communicating with an external device.

Storage section 52 stores execution condition information 53, history information 60, and the like. As illustrated in Fig. 3, execution condition information 53 is information used when setting the operation condition of the operation section including removal section 40 and conveyance section 22 according to the material and the weight of foreign matter 14. In execution condition information 53, an operation condition is set to operate the removal section more quickly as the material of foreign matter 14 is a lighter material. In addition, in execution condition information 53, the operation condition is set to operate removal section 40 more quickly as the weight of foreign matter 14 is lighter. Similarly, in execution condition information 53, the operation condition is set to operate removal section 40 more slowly as the material of foreign matter 14 is a heavier material. In execution condition information 53, the operation condition is set to operate removal section 40 more slowly as the weight of foreign matter 14 is heavier. For example, control section 51 can derive the weight of foreign matter 14, for example, by obtaining information on the material and region of foreign matter 14, that is, information on an area through image analysis, and multiplying the weight per unit volume corresponding to the material by the area as the volume.

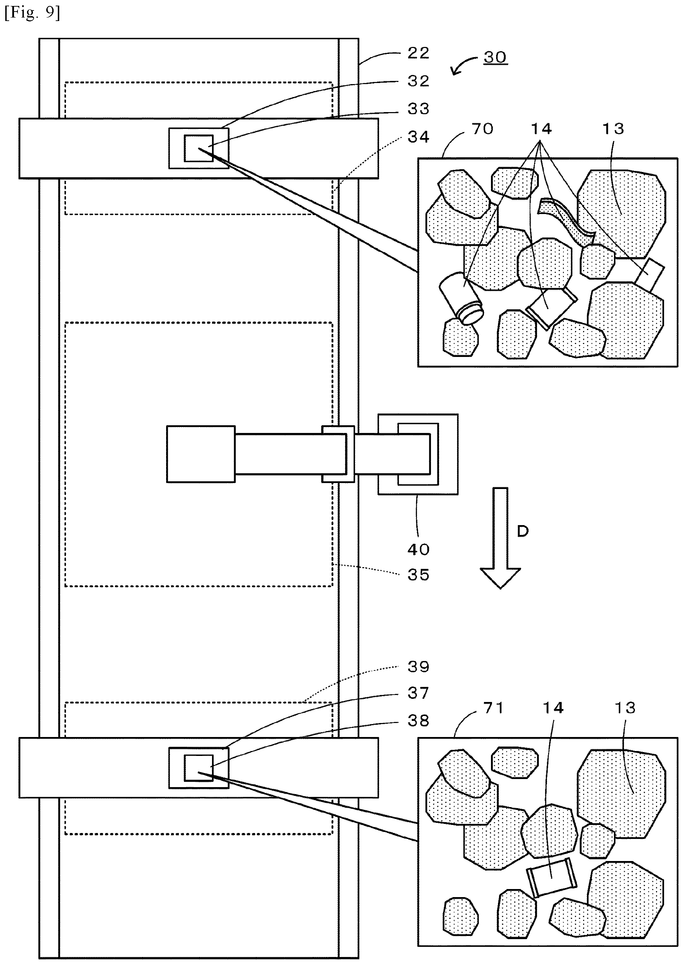

Storage section 52 stores history information 60. History information 60 is data including information on a state when removal section 40 removes foreign matter 14. As illustrated in Fig. 4, history information 60 may include content information 61, residual information 62, removal information 63, and work condition information 64. In history information 60, the information obtained from recognition image 70 (refer to Fig. 9) captured by recognition section 32 and detection image 71 captured by detection section 37 is recorded in association with each timing (#1 to #n) of each processing progress. Content information 61 includes the information relating to foreign matter 14 included in waste material 12 recognized by recognition section 32. Content information 61 includes, for example, information such as the number of foreign matters 14 included in waste material 12 in the processing progress, the number, the material, the weight, the presence position, the shape, and the like. Residual information 62 includes information relating to foreign matter 14 remaining in waste material 12 detected by detection section 37. Residual information 62 includes, for example, information on the number of foreign matters 14 remaining even after the removal of foreign matter 14 by removal section 40, and the position thereof. Removal information 63 includes information relating to foreign matter 14 removed from waste material 12 detected by detection section 37 and obtained from residual information 62. Removal information 63 includes, for example, success information indicating whether the removal of foreign matter 14 is successful, removal position information relating to the position where foreign matter 14 is removed, and information on the number of removed foreign matters 14. Removal information 63 includes information for evaluating a state when removal section 40 removes foreign matter 14. The information of an evaluation result includes, for example, removal rate information for removing foreign matter 14 by removal section 40, information relating to removal efficiency when foreign matter 14 is removed, and the like. Removal information 63 and residual information 62 may be regarded as differences with respect to content information 61, and any one of them may be omitted.

Work condition information 64 includes information relating to various states when removal section 40 performs work. Work condition information 64 includes, for example, work time information, work order information, work trajectory information, and the like in addition to waste material amount information, foreign matter amount information, and operation condition information. The waste material amount information is information relating to the amount of waste materials 12 being conveyed to conveyance section 22. The foreign matter amount information is information relating to the amount of foreign matters 14 being conveyed to conveyance section 22. The operation condition information is information relating to the operation condition of removal section 40 when removal section 40 removes foreign matter 14. The work time information is information relating to the work time required when removal section 40 removes foreign matter 14. The work order information is information relating to the order in which removal section 40 has operated when removing foreign matter 14. The work trajectory information is information relating to the operation trajectory that removal section 40 has moved when removing foreign matter 14. History information 60 is used as a guideline as to whether the current operation of waste material processing system 30 is within the normal range, or the like.

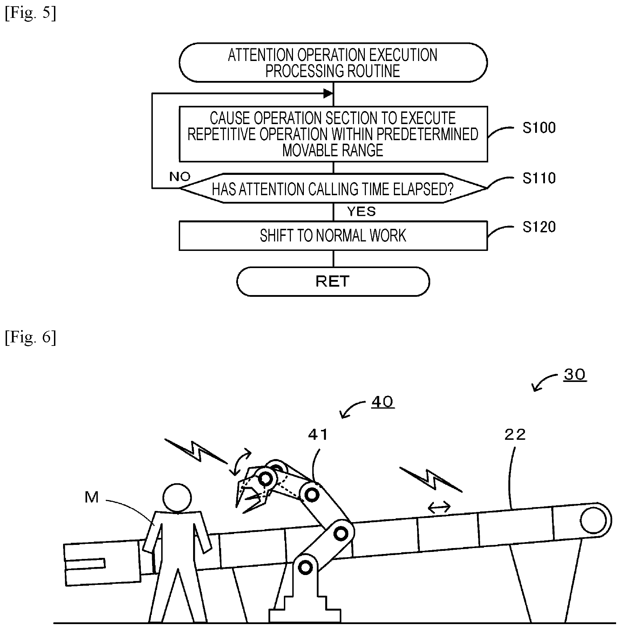

Next, an operation of waste material processing system 30 configured in this way will be described. First, processing in activating recycling system 10 will be described using waste material processing system 30. Fig. 5 is a flowchart illustrating an example of an attention operation execution processing routine executed by control section 51 of control device 50. Fig. 6 is an explanatory diagram illustrating an example of an attention operation by waste material processing system 30. The attention operation execution processing routine is stored in storage section 52 of control device 50, and is executed by control section 51 when recycling system 10 or waste material processing system 30 is activated. In a case where this routine is started, control section 51 causes operation sections that execute predetermined operations, such as conveyance section 22 or removal section 40, to execute the repetitive operations as attention calling operations within a predetermined movable range. The movable range is set to, for example, a safe range in which the workers are not caught in the operation of the operation sections even if there are workers in the vicinity. In a case where the attention calling operation is executed, the operation section emits an operation sound. Next, control section 51 determines whether a predetermined attention calling time has elapsed (SI 10). Here, the "attention calling time" may be set to a time (for example, 5 seconds, 10 seconds, or the like) during which, for example, the worker can recognize that recycling system 10 or waste material processing system 30 is activated from now on. Control section 51 executes the processing of S 100 when the attention calling time has not elapsed. That is, control section 51 continues the repetitive operation within the predetermined movable range. On the other hand, when the attention calling time has elapsed in S110, control section 51 ends the repetitive operation, shifts to the normal processing work of waste material 12 (S120), and ends the routine.

As illustrated in Fig. 6, in a case where the operation section of waste material processing system 30 performs the repetitive operation, worker M can audibly detect the operation sound or the like and visually detect the operation of the operation section. Recycling system 10 is intended to be automated by a robot, but the work of worker M is also required. In general, in such recycling system 10, from the viewpoint of the safety of worker M, a safety fence may be provided to prevent the power supply from turning on when worker M is in the fence, or a speaker may be provided to emit a warning sound. However, even with such safety measures, there is a case where worker M is in the vicinity of the operation section, and the measures are not sufficient. In addition, the configuration of recycling system 10 is sometimes complicated, such as installing the safety fence, controlling the power supply, installing the speaker, and the like. In this recycling system 10, when the system is activated, the operation section performs a safe repetitive operation during the attention calling time, so that worker M can take safety measures such as leaving the operation section without requiring a special configuration.

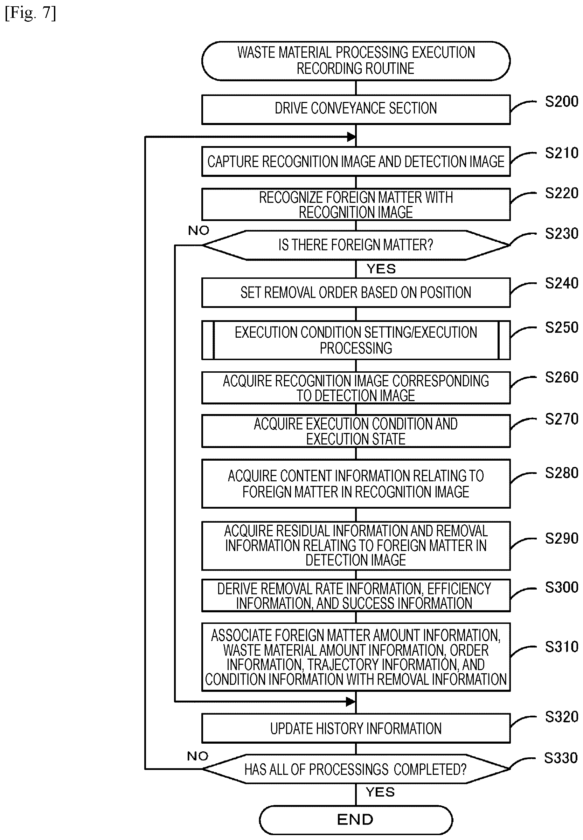

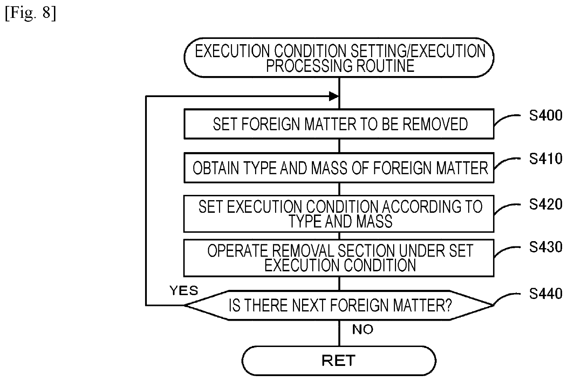

Next, processing of removing foreign matter 14 from waste material 12 and processing of recording history thereof by waste material processing system 30 will be described. Fig. 7 is a flowchart illustrating an example of a waste material processing execution recording routine executed by control section 51 of control device 50. Fig. 8 is a flowchart illustrating an example of an execution condition setting/execution processing routine executed by control section 51 of control device 50. Fig. 9 is an explanatory diagram illustrating an example of recognition image 70 and detection image 71 when processing waste material 12. The waste material processing execution recording routine is stored in storage section 52 and executed after waste material processing system 30 is activated.

In a case where this routine is started, control section 51 causes conveyance section 22 to be driven based on the execution condition (S200), causes recognition section 32 to capture recognition image 70, and causes detection section 37 to capture detection image 71 (S210). The captured image is stored in storage section 52, for example. Next, control section 51 executes processing of recognizing foreign matter 14 in addition to target object 13 using recognition image 70 (S220). Control section 51 recognizes a position of foreign matter 14 using the function of recognition section 32. Next, control section 51 determines whether foreign matter 14 is present (S230), and when foreign matter 14 is present, sets the removal order based on the position of foreign matter 14 (S240). For example, when there are one or more foreign matters 14 in recognition image 70, control section 51 may assign the numbers in order from the one closest to removal section 40.

After S240, control section 51 executes the execution condition setting/execution processing routine illustrated in Fig. 8 (S250). This routine is stored in storage section 52 and executed by control section 51. In a case where this routine is started, control section 51 first sets foreign matter 14 to be removed (S400). Control section 51 can set foreign matter 14 to be removed based on the above-described removal order. Next, control section 51 obtains the type and weight of foreign matter 14 to be removed using the function of recognition section 32 (S410). The weight of foreign matter 14 can be roughly calculated by, for example, the weight per unit volume determined according to the type and an area of a region of foreign matter 14.

Subsequently, control section 51 sets the execution condition of the operation section including removal section 40 using execution condition information 53 according to the type and weight of foreign matter 14 (S420). Based on the setting of execution condition information 53, control section 51 sets the execution condition such that it operates at a high speed as the material of foreign matter 14 is lighter and it operates at a low speed as the material of foreign matter 14 is heavier. In a case where the weight of foreign matter 14 is light, it is desirable to move removal section 40 at a higher speed according to the inertia or the like from the viewpoint of processing efficiency. In addition, in a case where the weight of foreign matter 14 is heavy, it is desirable to move removal section 40 at a lower speed according to the inertia or the like from the viewpoint of the risk of dropping foreign matter 14 and the breakage of arm robot 41. In this manner, control section 51 sets the execution condition corresponding to foreign matter 14.

Next, control section 51 operates removal section 40 under the set execution condition (S430). Removal section 40 operates under an execution condition suitable for the material and weight of foreign matter 14, and removes foreign matter 14 from the conveyance line. Then, control section 51 determines whether there is foreign matter 14 to be removed next (S440), and when there is foreign matter 14 to be removed next, executes the processing S400 onwards. That is, control section 51 sets foreign matter 14 to be removed next, sets the execution condition corresponding to the type and the weight, and operates removal section 40 under the set execution condition. On the other hand, when there is no foreign matter 14 to be removed next in S440, control section 51 ends the routine.

After executing the execution condition setting/execution processing routine in S250, control section 51 reads and acquires recognition image 70 corresponding to the captured detection image 71 (S260). In this case, control section 51 obtains a time from the conveyance speed, and acquires recognition image 70 including the same as target object 13 of detection image 71 from storage section 52 (refer to Fig. 9). Next, control section 51 acquires the execution conditions and the execution states of removal section 40 and conveyance section 22 when the image is captured by detection section 37 (S270). The execution conditions include operation conditions, and the execution states include the amount of waste material being conveyed, the amount of foreign matter, the order of removal of foreign matter 14, and the work time. The movement trajectories of removal section 40 and the like are included. Next, control section 51 acquires content information relating to foreign matter 14 included in recognition image 70 (S280). The content information includes the number, the material, the weight, the position, and the like of foreign matter 14 included in recognition image 70. Next, control section 51 acquires residual information and removal information relating to foreign matter 14 included in detection image 71 (S290). The residual information includes the number of foreign matters 14 remaining in detection image 71, the remaining position thereof, and the like. The removal information includes information on the success or failure of removal of foreign matter 14, the removal position, the number of removed matters, and the like.

After S290, control section 51 derives removal rate information, efficiency information, and success information (S300). The removal rate can be obtained from the number of foreign matters 14 present before the removal and the number of foreign matters 14 remaining after the removal. In addition, the removal efficiency can be obtained as the number of foreign matters 14 removed per unit time from the work time and the number of removed matters. The success information can be defined, for example, as success when foreign matter 14 is removed, and failure to remove foreign matter 14 when foreign matter 14 remains and its position changes. Subsequently, control section 51 associates the foreign matter amount information, the waste material amount information, the order information, the trajectory information, and the condition information with the content information, the removal information, the residual information, and further the removal rate information and the efficiency information with the number of the processing elapsed time (S310). Through this association, as illustrated in Fig. 4, content information 61, removal information 63, residual information 62, and work condition information 64 are associated.

After S310 or when there is no foreign matter 14 in S230, control section 51 updates history information 60 (S320). When there is foreign matter 14, control section 51 executes processing of including associated content information 61, removal information 63, residual information 62, and work condition information 64 in history information 60 and of storing the information in storage section 52. That is, control section 51 acquires information relating to foreign matter 14 included in waste material 12, and performs processing of storing content information 61 before the removal of foreign matter 14, removal information 63 relating to the state of the foreign matter removal in removal area 35, and residual information 62 in storage section 52. In addition, control section 51 appends information such as the execution condition and the execution state of removal section 40 to the information. When there is no foreign matter 14, control section 51 stores the information on the absence of foreign matter 14 in history information 60. After S320, control section 51 determines whether the processing of all waste materials 12 has ended (S330), and when the processing of all waste materials 12 has not ended, executes the processing S210 onwards. That is, the image is captured by recognition section 32 and detection section 37, and if there is a foreign matter, it is removed under an execution condition corresponding to the material and the weight of the foreign matter, and whether the removal is successful or foreign matter 14 remains is stored in history information 60. On the other hand, when the processing of all waste materials 12 is completed in S330, the routine is ended. As described above, control section 51 updates history information 60 while controlling removal section 40 to remove foreign matter 14.

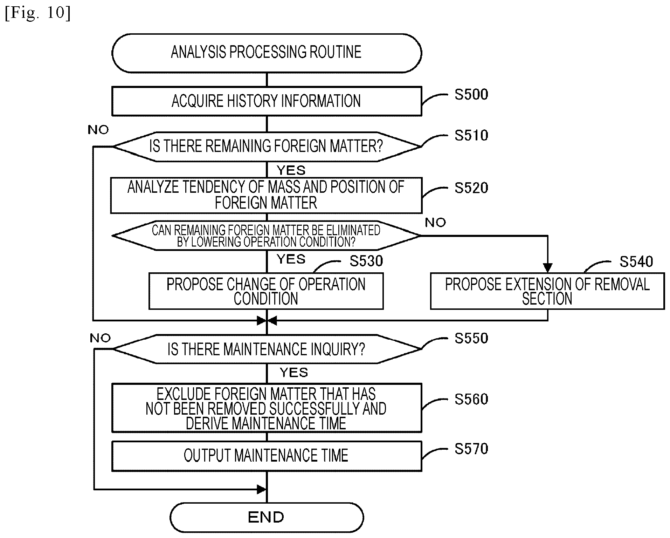

Next, the processing of analyzing whether the removal processing of foreign matter 14 by waste material processing system 30 is appropriate using history information 60 will be described. Fig. 10 is a flowchart illustrating an example of an analysis processing routine executed by control section 51 of control device 50. This routine is stored in storage section 52, and is executed after the worker inputs the execution command by input section 57. In a case where this routine is executed, control section 51 first reads and acquires history information 60 from storage section 52 (S500), and determines whether there is remaining foreign matter 14 in waste material 12 (S510). When there is remaining foreign matter 14, control section 51 analyzes the tendency of the mass, position of foreign matter 14, the amount of waste material at that time, the amount of foreign matters (S520), and determines whether the remaining of foreign matter 14 can be eliminated by lowering the operation condition of conveyance section 22 (S530). For example, control section 51 can make the determination from the relationship between the conveyance speed of conveyance section 22 and the removal efficiency when multiple foreign matters 14 are mixed in waste material 12. In addition, when making this determination, control section 51 may consider movement trajectory of removal section 40, the order of removal, the material of foreign matter 14, the amount of waste materials, the amount of foreign matters, and the like. When remaining foreign matter 14 can be eliminated by lowering the operation condition of conveyance section 22, control section 51 proposes a change of the operation condition of conveyance section 22 (S530). Control section 51 displays and outputs, for example, an image including lowering the operation condition of conveyance section 22 on display section 56. On the other hand, when remaining foreign matter 14 cannot be eliminated by lowering the operation condition of conveyance section 22, control section 51 proposes the extension or the change of removal section 40 (S540). In a case where it is determined that foreign matter 14 cannot be completely removed even if the operation of conveyance section 22 is lowered, that is, foreign matter 14 is moved slowly, control section 51 proposes increasing removal section 40. In addition, in a case where the removal of foreign matter 14 of a specific material fails, control section 51 may propose a change of the end effector or the like.

In a case where there is no remaining foreign matter 14 after S540, after S530, or in S510, control section 51 determines whether there is an inquiry relating to the maintenance of removal section 40 (S550). The maintenance inquiry is inputted by the worker in activating the routine. When there is an inquiry for maintenance, if there is foreign matter 14 that has not been removed successfully, the processing contents of foreign matter 14 are excluded to derive the maintenance time of removal section 40 (S560), and the information relating to the derived maintenance time is displayed and outputted on display section 56 (S570). Removal section 40 causes wear and tear of the device when foreign matter 14 is actually moved, for example, a heavy object. Therefore, in a case where the movement of foreign matter 14 fails, removal section 40 hardly causes such wear and tear. Control section 51 can derive a more appropriate maintenance time in consideration of the failure to remove foreign matter 14. When there is no maintenance inquiry after S570 or in S550, control section 51 ends the routine.

Here, a correspondence relation between elements of the present embodiment and elements of the present disclosure will be clarified. Waste material processing system 30 of the present embodiment corresponds to the waste material processing system of the present disclosure, conveyance section 22 corresponds to the conveyance section and the operation section, detection section 37 corresponds to the detection section, detection imaging section 38 corresponds to the detection imaging section, recognition section 32 corresponds to the recognition section, recognition imaging section 33 corresponds to the recognition imaging section, removal section 40 corresponds to the removal section and the operation section, arm robot 41 corresponds to the arm robot, storage section 52 corresponds to the storage section, and control section 51 corresponds to the processing section, the execution section, and the control section. In addition, waste material 12 corresponds to waste material, foreign matter 14 corresponds to foreign matter, removal area 35 corresponds to the removal area, content information 61 corresponds to the content information, residual information 62 corresponds to the residual information, recognition image 70 corresponds to the recognition image, and detection image 71 corresponds to the detection image.

Waste material processing system 30 described above is a waste material processing system that places waste material 12 on a conveyance surface of conveyance section 22, conveys waste material 12 in the conveyance line, and recycles waste material 12, and includes detection section 37 that is disposed on the downstream side of removal area 35 where foreign matter 14 included in waste material 12 is removed in the conveyance line and that detects foreign matter 14 remaining in conveyed waste material 12. In a case where waste material processing system 30 is used, worker M can obtain information on foreign matter 14 remaining after foreign matter 14 is removed from waste material 12, for example, information on the number, the size, the shape, and the like, and based on the information, the removal processing in removal area 35 can be improved. Accordingly, in waste material processing system 30, it is possible to more appropriately execute removal of foreign matter 14 when recycling waste material 12. In addition, waste material processing system 30 includes control section 51 that performs processing or acquiring information relating to foreign matter 14 remaining in waste material 12 from detection section 37, and of storing removal information 63 relating to the state of foreign matter removal in removal area 35 in storage section 52. In waste material processing system 30, worker M can utilize removal information 63 by storing removal information 63 relating to the state of the foreign matter removal in removal area 35 in storage section 52. Then, worker M can use removal information 63 to improve the removal processing in removal area 35.

In addition, control section 51 acquires content information 61 relating to foreign matter 14 included in waste material 12 from recognition section 32 that is disposed on an upstream side of removal area 35 and recognizes foreign matters 14 included in waste material 12, acquires residual information 62 relating to foreign matters 14 remaining in waste material 12 from detection section 37, and acquires removal information 63 including one or more of removal rate information relating to a removal rate of the foreign matters, removal position information relating to a removal position of the foreign matters, success information relating to success or failure of the foreign matter removal, and efficiency information relating to removal efficiency of the foreign matters by using content information 61 and residual information 62. In waste material processing system 30, it is possible to grasp the presence of foreign matters and the state of removal of foreign matters before and after removal area 35, and it is possible to improve the removal processing in removal area 35 using one or more of the removal rate information, the removal position information, the success information, and the efficiency information obtained thereby. As a result, in waste material processing system 30, it is possible to more appropriately execute the removal of foreign matters.

In addition, recognition section 32 includes recognition imaging section 33 that images the conveyance line and obtains recognition image 70, detection section 37 includes detection imaging section 38 that images the conveyance line and obtains detection image 71, and control section 51 acquires recognition image 70 corresponding to detection image 71 based on a conveyance speed of the conveyance line, acquires content information 61 and residual information 62, and acquires removal information 63 including one or more of the removal rate information, the removal position information, the success information, and the efficiency information. In waste material processing system 30, by using the captured image, it is possible to more easily acquire information relating to foreign matter 14. Further, control section 51 acquires one or more of foreign matter amount information relating to the amount of foreign matters 14 being conveyed to conveyance section 22 and waste material amount information relating to the amount of waste materials 12 being conveyed to conveyance section 22, and stores the information in storage section 52 in association with removal information 63. In waste material processing system 30, it is possible to improve the removal processing in removal area 35 using the foreign matter amount information, the waste material amount information, and the like, and as a result, it is possible to more appropriately execute removal of foreign matter 14.

In addition, waste material processing system 30 includes a removal section 40 that is disposed in removal area 35 and removes foreign matter 14 included in waste material 12, and control section 51 that acquires information relating to foreign matter 14 remaining in waste material 12 from detection section 37 and acquires removal information 63 relating to the state of foreign matter removal in removal area 35. Control section 51 acquires one or more of work order information relating to the order in which removal section 40 has operated when removing foreign matter 14, work trajectory information relating to a removal operation trajectory, and the operation condition information relating to the operation condition of removal section, and stores the information in storage section 52 in association with removal information 63. In waste material processing system 30, it is possible to improve the removal processing in removal area 35 using the work order information, the work trajectory information, the operation condition information, and the like, and as a result, it is possible to more appropriately execute removal of foreign matter 14.

In addition, waste material processing system 30 includes removal section 40 that is disposed in removal area 35 and removes foreign matter 14 included in waste material 12, and control section 51 that acquires information relating to foreign matter 14 remaining in waste material 12 from detection section 37 and that acquires removal information 63 relating to the state of the foreign matter removal in removal area 35. Control section 51 acquires residual information 62 relating to foreign matter 14 remaining in waste material 12 from detection section 37, and sets the maintenance timing of removal section 40 according to residual information 62. For example, when foreign matter 14 is actually removed, removal section 40 occurs wear and tear such as abrasion, and when the removal of foreign matter 14 fails, this kind of wear and tear is less likely to occur. In waste material processing system 30, it is possible to further suppress the execution of excessive maintenance and to execute more appropriate maintenance using residual information 62.

In addition, waste material processing system 30 includes removal section 40 that is disposed in removal area 35 and that removes foreign matter 14 included in waste material 12, and control section 51 that causes predetermined operation sections including conveyance section 22 and/or removal section 40 to execute predetermined attention operations before executing the recycling processing of waste material 12 by waste material processing system 30. In waste material processing system 30, a predetermined attention operation is executed on a predetermined operation section before the recycling processing of waste material 12 by waste material processing system 30 is executed. Therefore, worker M can recognize that waste material processing system 30 is to be operated from now on. Accordingly, in waste material processing system 30, for example, a facility such as an alarm device is not necessary, and when waste material 12 is recycled, it is possible to further improve the safety of worker M while further suppressing the complication of the configuration.

In addition, waste material processing system 30 includes removal section 40 that is disposed in removal area 35 and that removes foreign matter 14 included in waste material 12, recognition section 32 that is disposed on the upstream side of removal area 35 where foreign matter 14 included in waste material 12 is removed in the conveyance line and recognizes foreign matter 14 included in waste material 12, and control section 51 that acquires the foreign matter information relating to the amount and/or the material of foreign matter 14 from recognition section 32, that sets the operation condition of removal section 40 based on the foreign matter information, and that controls removal section 40 under the set operation condition. In waste material processing system 30, since removal section 40 can be controlled under an operation condition corresponding to the amount and material of foreign matter 14, removal of foreign matter 14 can be more efficiently executed when recycling waste material 12.

In addition, control section 51 performs any one or more of setting the operation condition for operating removal section 40 more quickly as the material of foreign matter 14 is a lighter material, setting the operation condition for operating removal section 40 more quickly as the weight of foreign matter 14 obtained from information of the material and the region of foreign matter 14 is lighter, setting the operation condition for operating removal section 40 more slowly as the material of foreign matter 14 is a heavier material, and setting the operation condition for operating removal section 40 more slowly as the weight of foreign matter 14 obtained from the information of the material and the region of foreign matter 14 is heavier. In waste material processing system 30, it is possible to quickly operate removal section 40 according to the amount and material of foreign matter 14, or to operate removal section 40 slowly to further improve the removal success rate such as reducing the load of removal section 40 or dropping foreign matter 14. As described above, in waste material processing system 30, it is possible to more efficiently execute removal of foreign matter 14 when recycling waste material 12. In addition, control section 51 is configured to cause the operation section to execute a repetitive operation within a predetermined movable range for a predetermined attention calling time as the attention operation, and then to execute the recycling processing of waste material 12. In waste material processing system 30, worker M can recognize that waste material processing system 30 operates from now on by the repetitive operation of the operation section. Further, since removal section 40 has arm robot 41, foreign matter 14 can be removed by arm robot 41 in waste material processing system 30.

It is needless to say that the present disclosure is not in any way limited to the above-described embodiment, and the present disclosure can be implemented in various aspects as long as the aspects fall within the technical scope of the present disclosure.

For example, in the above-described embodiment, control section 51 acquires removal information 63 including the removal rate information relating to the removal rate of foreign matter 14, the removal position information relating to the removal position of foreign matter 14, the success information relating to the success or failure of the removal of foreign matter 14, and the efficiency information relating to the removal efficiency of foreign matter 14, but these are merely examples, and the configuration is not particularly limited to this, and one or more of the information may be omitted, or information other than these may be further added. In waste material processing system 30 as well, removal information 63 can be used to improve the removal processing in removal area 35.

In the above-described embodiment, recognition section 32 includes recognition imaging section 33 and detection section 37 includes detection imaging section 38 to acquire recognition image 70 corresponding to detection image 71 based on the conveyance speed of conveyance section 22, but the configuration is not particularly limited to this. For example, recognition section 32 and detection section 37 may be synchronized, and recognition image 70 corresponding to detection image 71 may be acquired without using the conveyance speed. In addition, although recognition section 32 and detection section 37 are configured to intermittently image the object conveyed by conveyance section 22 in a still image, it may be configured to continuously image the object in a video. In addition, recognition section 32 and detection section 37 are configured to recognize or detect the presence position of foreign matter 14 using the captured image, but the configuration is not particularly limited to this, and may be configured to recognize or detect the presence position of foreign matter 14 without using the captured image.

In the above-described embodiment, work condition information 64 includes the foreign matter amount information relating to the amount of foreign matters 14 being conveyed to conveyance section 22 and the waste material amount information relating to the amount of waste materials 14 being conveyed to conveyance section 22, but these are merely examples, and the configuration is not particularly limited to these, and one or more of them may be omitted, or information in addition to the information may be further added. In addition, in the above-described embodiment, the work order information relating to the order in which removal section 40 has operated when removing foreign matter 14, the work trajectory information relating to the removal operation trajectory, and the operation condition information relating to the operation condition of removal section 40 are acquired and stored in storage section 52 in association with removal information 63, but these are merely examples, and the configuration is not particularly limited to these, and one or more of them may be omitted, or information in addition to the information may be further added.

In the above-described embodiment, control section 51 as a processing section acquires residual information 62 relating to foreign matter 14 remaining in waste material 12 from detection section 37, and sets the maintenance timing of removal section 40 according to residual information 62, but the configuration is not particularly limited to this, and setting of the maintenance timing of removal section 40 may be omitted. In waste material processing system 30 as well, removal information 63 can be used to improve the removal processing in removal area 35.

In the above-described embodiment, control section 51 as an execution section causes the operation section including conveyance section 22 and/or removal section 40 to execute the attention operation before executing the recycling processing of waste material 12 by waste material processing system 30, but the configuration is not particularly limited to this, and the attention operation may be executed on the operation section included in recycling system 10 other than waste material processing system 30. Examples of the operation section include, for example, any one or more of first crusher 15, first magnetic separator 16, screen machine 17, second crusher 18, second magnetic separator 19, and conveyance sections 20 to 25. In addition, in the above-described embodiment, control section 51 executes the repetitive operation as the attention operation, but the configuration is not particularly limited to this, and the operation may be an operation different from the repetitive operation. In addition, in the above-described embodiment, the attention operation is performed to notify worker M of the system activation by the auditory operation sound and the visual operation, but an attention operation may be performed either audibly or visually. In addition, in the above-described embodiment, control section 51 as an execution section causes a predetermined operation section to execute a predetermined attention operation, but the configuration is not particularly limited to this, and the execution of the attention operation may be omitted. In waste material processing system 30 as well, removal information 63 can be used to improve the removal processing in removal area 35.

In the above-described embodiment, control section 51 as a control section is configured to set the operation condition of removal section 40 to operate either more quickly with lighter weight or more slowly with heavier weight based on the amount and/or the material of foreign matter 14, but the configuration is not particularly limited to this. For example, control section 51 may set the operation condition to tend to operate more quickly as the amount and/or the material of foreign matter 14 is lighter, or may set the operation condition to tend to operate more slowly as the amount and/or the material of foreign matter 14 is heavier. That is, control section 51 may set the operation condition that makes the overall speed faster but allows some regions to oppose it, or may set the operation condition that makes the overall speed slower but allows some regions to oppose it. Alternatively, control section 51 is configured to set the operation condition of the removal section based on the foreign matter information relating to the amount and/or the material of foreign matter, but the configuration is not particularly limited to this, and the setting of the operation condition may be omitted. In waste material processing system 30 as well, removal information 63 can be used to improve the removal processing in removal area 35.

In the above-described embodiment, removal section 40 has been described as having arm robot 41, but the configuration is not particularly limited to this as long as it removes foreign matter 14 from waste material 12. For example, removal section 40 may be one in which tip portion 45 is attached to an XY robot that moves in XY directions by a slider. In addition, removal section 40 may be configured to scrape out foreign matters with a bucket (shovel) like a power shovel.

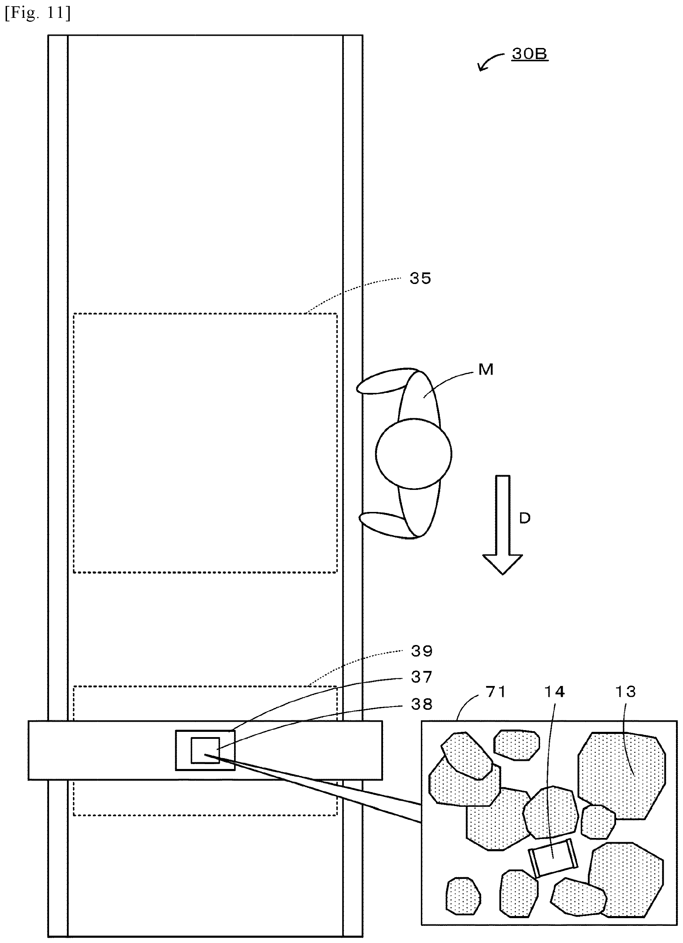

In the above-described embodiment, waste material processing system 30 has been described as having recognition section 32, but the configuration is not particularly limited to this, and recognition section 32 may be omitted as long as foreign matter 14 remaining in waste material 12 is detected. In waste material processing system 30 as well, by using residual information 62, the result of the removal work in removal area 35 can be known, so that the removal processing in removal area 35 can be improved. In addition, in the above-described embodiment, removal section 40 has been described as removing foreign matter 14, but the configuration is not particularly limited to this, and removal section 40 may be omitted. Fig. 11 is an explanatory diagram illustrating an example of a schematic configuration of another waste material processing system 30B. In waste material processing system 30B, support member 31, recognition section 32, and removal section 40 are omitted from waste material processing system 30 described above, so that worker M removes foreign matter 14. Also, in waste material processing system 30B, by using residual information 62 obtained by detection section 37, the result of the removal work in removal area 35 can be known, so that the removal processing in removal area 35 can be improved.

Here, waste material processing system 30 of the present disclosure may be configured as follows. For example, waste material processing system 30 is a waste material processing system that places waste material 12 on the conveyance surface of conveyance section 22, conveys waste material 12 in the conveyance line, and recycles waste material 12, waste material processing system 30 may include removal section 40 that is disposed in removal area 35 where foreign matters 14 included in waste material 12 is removed in the conveyance line and configured to remove foreign matters 14 included in waste material 12, and control section 51 configured to acquire foreign matter information relating to an amount and/or material of foreign matters from recognition section 32 that is disposed on an upstream side of removal area 35 and that recognizes foreign matters 14 included in waste material 12, set an operation condition of removal section 40 based on the foreign matter information, and control removal section under the set operation condition. In waste material processing system 30, since removal section 40 can be controlled under an operation condition corresponding to the amount and material of foreign matter 14, removal of foreign matter 14 can be more efficiently executed when recycling waste material 12.

Alternatively, waste material processing system 30 is waste material processing system 30 that conveys and recycles waste material 12, and may include control section 51 as an execution section that causes a predetermined operation section including any one or more of conveyance section 22 that places waste material 12 on the conveyance surface and conveys the waste material 12 on the conveyance line, and removal section 40 that is disposed in removal area 35 where foreign matter 14 included in waste material 12 is removed in the conveyance line and that removes foreign matter 14 included in waste material 12 to execute a predetermined attention operation, before executing recycling processing of waste material 12 by waste material processing system 30. In waste material processing system 30, a predetermined attention operation is executed on a predetermined operation section before the recycling processing of waste material 12 by waste material processing system 30 is executed. Therefore, worker M can recognize that waste material processing system 30 is to be operated from now on. Accordingly, in waste material processing system 30, for example, a special configuration such as an alarm device is not necessary, and when waste material 12 is recycled, it is possible to further improve the safety of worker M while further suppressing the complication of the configuration.

### Industrial Applicability

The present disclosure is applicable to technical fields such as recycling of industrial waste.

### Reference Signs List

10: recycling system, 12: waste material, 13: target object, 14: foreign matter, 15: first crusher, 16: first magnetic separator, 17: screen machine, 18: second crusher, 19: second magnetic separator, 20 to 25: conveyance section, 30, 30B: waste material processing system, 31: support member, 32: recognition section, 33: recognition imaging section, 34: recognition area, 35: removal area, 36: support member, 37: detection section, 38: detection imaging section, 39: detection area, 40: removal section, 41: arm robot, 42 first arm, 43: second arm, 44: pedestal section, 45: tip portion, 50: control device, 51: control section, 52: storage section, 53: execution condition information, 56: display section, 57: input section, 58: communication section, 60: history information, 61: content information, 62: residual information, 63: removal information, 64: work condition information, 70: recognition image, 71: detection image, D: conveyance direction, M: worker

## Claims

1. A waste material processing system for placing a waste material on a conveyance surface of a conveyance section, conveying the waste material in a conveyance line, and recycling the waste material, the system comprising:
a detection section disposed on a downstream side of a removal area where foreign matters included in the waste material is removed in the conveyance line, and configured to detect the foreign matters remaining in the conveyed waste material.

2. The waste material processing system according to claim 1, further comprising:
a processing section configured to acquire information relating to the foreign matters remaining in the waste material from the detection section, and perform processing of storing removal information relating to a state of foreign matter removal in the removal area in a storage section.

3. The waste material processing system according to claim 2,
wherein the processing section is configured to acquire content information relating to the foreign matters included in the waste material from a recognition section that is disposed on an upstream side of the removal area and that recognizes the foreign matters included in the waste material, acquire residual information relating to the foreign matters remaining in the waste material from the detection section, and acquire the removal information including one or more of removal rate information relating to a removal rate of the foreign matters, removal position information relating to a removal position of the foreign matters, success information relating to success or failure of the foreign matter removal, and efficiency information relating to removal efficiency of the foreign matters by using the content information and the residual information.

4. The waste material processing system according to claim 3,
wherein the recognition section includes a recognition imaging section configured to image the conveyance line and obtains a recognition image,
the detection section includes a detection imaging section configured to image the conveyance line and obtain a detection image, and
the processing section is configured to acquire the recognition image corresponding to the detection image based on a conveyance speed of the conveyance line, acquire the content information and the residual information, and acquire the removal information including one or more of the removal rate information, the removal position information, the success information, and the efficiency information.

5. The waste material processing system according to any one of claims 2 to 4,
wherein the processing section is configured to acquire one or more of foreign matter amount information relating to an amount of the foreign matters being conveyed to the conveyance section and waste material amount information relating to an amount of waste materials being conveyed to the conveyance section, and stores the information in association with the removal information in the storage section.

6. The waste material processing system according to any one of claims 1 to 5, further comprising:
a removal section disposed in the removal area and configured to remove the foreign matters included in the waste material; and
a processing section configured to acquire information relating to the foreign matters remaining in the waste material from the detection section and acquire removal information relating to a state of foreign matter removal in the removal area,
wherein the processing section is configured to acquire one or more of order information relating to an order in which the removal section operates when removing the foreign matters, trajectory information relating to a removal operation trajectory, and condition information relating to an operation condition of the removal section, and store the information in the storage section in association with the removal information.

7. The waste material processing system according to any one of claims 1 to 6, further comprising:
a removal section disposed in the removal area and configured to remove the foreign matters included in the waste material; and
a processing section configured to acquire information relating to the foreign matters remaining in the waste material from the detection section and acquire removal information relating to a state of foreign matter removal in the removal area,
wherein the processing section is configured to acquire residual information relating to the foreign matters remaining in the waste material from the detection section, and set a timing of maintenance of the removal section according to the residual information.

8. A waste material processing system that conveys and recycles a waste material, comprising:
a conveyance section configured to place the waste material on a conveyance surface and convey the waste material on a conveyance line;
a recognition section disposed on an upstream side of a removal area where foreign matters included in the waste material are removed in the conveyance line and configured to recognize the foreign matters included in the waste material;
a removal section disposed in the removal area and configured to remove the foreign matters included in the waste material;
a storage section configured to store information;
the detection section according to any one of claims 1 to 7;
a processing section configured to acquire information relating to the foreign matters remaining in the waste material from the detection section and perform processing of storing removal information relating to a state of foreign matter removal in the removal area in the storage section.

9. The waste material processing system according to any one of claims 1 to 8, further comprising:
a removal section disposed in the removal area and configured to remove the foreign matters included in the waste material; and
an execution section configured to cause a predetermined operation section including the conveyance section and/or the removal section to execute a predetermined attention operation, before executing recycling processing of the waste material by the waste material processing system.

10. The waste material processing system according to any one of claims 1 to 9, further comprising:
a removal section disposed in the removal area and configured to remove the foreign matters included in the waste material;
a recognition section disposed on an upstream side of the removal area where the foreign matters included in the waste material are removed in the conveyance line and configured to recognize the foreign matters included in the waste material;
a control section configured to acquire foreign matter information relating to an amount and/or material of the foreign matters from the recognition section, set an operation condition of the removal section based on the foreign matter information, and control the removal section under the set operation condition.

11. A waste material processing system for placing a waste material on a conveyance surface of a conveyance section, conveying the waste material in a conveyance line, and recycling the waste material, the system comprising:
a removal section disposed in a removal area where foreign matters included in the waste material are removed in the conveyance line and configured to remove the foreign matters included in the waste material; and
a control section configured to acquire foreign matter information relating to an amount and/or material of the foreign matter from a recognition section that is disposed on an upstream side of the removal area and that recognizes the foreign matters included in the waste material, set an operation condition of the removal section based on the foreign matter information, and control the removal section under the set operation condition.

12. The waste material processing system according to claim 10 or 11,
wherein the control section is configured to perform any one or more of setting the operation condition for operating the removal section more quickly as the material of the foreign matter is a lighter material, setting the operation condition for operating the removal section more quickly as a weight of the foreign matter obtained from information of the material and a region of the foreign matter is lighter, setting the operation condition for operating the removal section more slowly as the material of the foreign matter is a heavier material, and setting the operation condition for operating the removal section more slowly as the weight of the foreign matter obtained from the information of the material and the region of the foreign matter is heavier.

13. A waste material processing system for conveying and recycling a waste material, comprising:
an execution section configured to cause a predetermined operation section including any one or more of a conveyance section configured to place a waste material on a conveyance surface and convey the waste material on a conveyance line, a removal section disposed in a removal area for removing foreign matters included in the waste material in the conveyance line and configured to remove the foreign matters included in the waste material to execute a predetermined attention operation, before executing recycling processing of the waste material by the waste material processing system.

14. The waste material processing system according to claim 9 or 13,
wherein the execution section is configured to cause the operation section to execute a repetitive operation within a predetermined movable range for a predetermined attention calling time as the attention operation, and then to execute the recycling processing of the waste material.

15. The waste material processing system according to any one of claims 1 to 14, further comprising:
a removal section disposed in the removal area where the foreign matters included in the waste material are removed,
wherein the removal section includes an arm robot.
